# EUROPEAN PATENT SPECIFICATION

(11) **EP 3 037 272 B1**
(45) Date of publication and mention of the grant of the patent: **20.05.2020**
(21) Application number: 14848120.3
(22) Date of filing: 25.09.2014
(51) Int. Cl.: B41M 7/00, B41F 16/00, H01M 2/02, H01M 10/0525

(54) **BATTERY CELL SURFACE PRINTING METHOD**
DRUCKVERFAHREN FÜR BATTERIEZELLENOBERFLÄCHE
PROCÉDÉ D'IMPRESSION DE SURFACE D'ÉLÉMENT DE BATTERIE

(30) Priority: 30.09.2013 KR 20130116228
(43) Date of publication of application: 29.06.2016
(73) Proprietor: LG Chem, Ltd., Seoul 07336 (KR)
(72) Inventor: KIM, Tae Wook, Daejeon 34122 (KR); YUN, Hyung Ku, Daejeon 34122 (KR)
(74) Representative: Plasseraud IP
(86) International application number: PCT/KR2014/008952
(87) International publication number: WO 2015/046908

(56) References cited:
- JP-A- 2001 331 112
- JP-A- 2002 037 227
- JP-A- 2003 058 057
- JP-A- 2005 135 770
- JP-A- 2006 331 667
- JP-A- 2009 289 533
- JP-A- 2010 228 436
- KR-A- 20110 107 164
- KR-B1- 101 300 106

## Description

### [TECHNICAL FIELD]

The present invention relates to a method of printing the surface of a battery cell and, more particularly, to a method of printing information on the surface of a battery cell using a heat transfer machine, the method including unwinding a heat transfer film having an adhesion layer for indicating the information stacked on a release paper from a heat transfer roller, on which the heat transfer film is wound, locating the heat transfer film on one major surface of the battery cell, applying heat and pressure to the heat transfer film to attach the adhesion layer of the heat transfer film to one major surface of the battery cell, and winding the release paper of the heat transfer film on a release paper roller.

### [BACKGROUND ART]

As mobile devices have been increasingly developed, and the demand for such mobile devices has increased, the demand for secondary batteries has also sharply increased. Among such secondary batteries is a lithium secondary battery having high energy density and operating voltage and excellent charge retention and service-life characteristics, which has been widely used as an energy source for various electronic products as well as for the mobile devices.

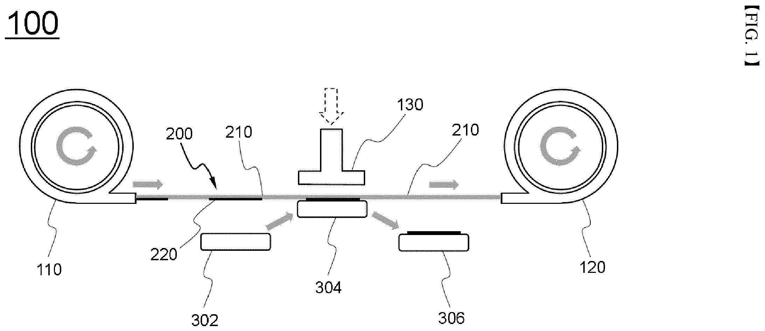

JP 2001-331112 discloses a step of overlapping an intermediate transfer medium in which is a medium to be transferred, and thermally compressing the sameby a thermal head and a roller (see Figure 1, claim 2, paragraph [11]).

JP 2010-228436 discloses a stepof peeling a remaining part from a printed product by a peeling roller and winding the same on a winding bobbin after a resin of a transfer layer is transferred to the printed product (see figure 1, paragraph [26]).

JP 2006 331667 A discloses a labelling machine printing measured voltage of a battery and charging/administration information in the machine, and sticking a label in a manner of covering an electrode part of the battery

JP 2009 289533 A dicloses a battery pack capable of suitably visualizing information described on a label stuck on a battery outer frame.

JP 2003 058057 A discloses a label for manganese battery in which the peel-off of an overlap section can be prevented without adversely affecting the battery and which has excellent impact resistance.

JP 2002 037227 A discloses a method for sticking a label on a plate body and a method for sticking a label on a battery pack, which prevent wrinkles from being formed and bubbles from occurring on a sticking surface when a label is stuck on a planar plate body.

Depending upon the kind of an external device in which a secondary battery is used, the secondary battery may be configured to have a detachable type structure in which the secondary battery can be easily inserted into and removed from the external device or to have an embedded type structure in which the secondary battery is embedded in the external device. For example, the secondary battery can be inserted into or removed from devices, such as laptop computers, as needed. On the other hand, devices, such as some kinds of mobile phones and MPEG Audio Layer-3 (MP3) players, require an embedded type battery pack due to the structure or capacity thereof.

Product information of the secondary battery is indicated on the surface of the secondary battery such that a user may recognize characteristics, performance, and use of the secondary battery. That is, product information, such as type, voltage, and capacity, of the secondary battery is printed on the surface of the secondary battery such that the user can easily recognize product information of the secondary battery so as to prevent improper use of the secondary battery and to estimate performance of the secondary battery.

The product information may be indicated on the secondary battery using various methods. For example, a label having product information printed thereon may be attached to the surface of the secondary battery. In this case, however, air bubbles may be formed at the surface of the secondary battery when the label is attached to the surface of the secondary battery or the label, which has already been attached to the surface of the secondary battery, may be separated from the surface of the secondary battery.

In recent years, on the other hand, a PAD printing method has been used to print the product information on the secondary battery. In the PAD printing method, however, it takes too much time to set various conditions for PAD printing due to various factors. In addition, it may be difficult to maintain a printing machine for PAD printing. Furthermore, it is necessary to perform ultraviolet (UV) irradiation after the PAD printing, which leads to incurrence of cost related to equipment and processes necessary to perform the UV irradiation.

Consequently, there is a high necessity for a technology that is capable of fundamentally solving the above problems.

### [DISCLOSURE]

### [TECHNICAL PROBLEM]

Therefore, the present invention has been made to solve the above problems and other technical problems that have yet to be resolved.

Specifically, it is an object of the present invention to provide a method of printing the surface of a battery cell that is capable of printing product information on the surface of the battery cell through a simplified process.

### [TECHNICAL SOLUTION]

In accordance with one aspect of the present invention, the above and other objects can be accomplished by the provision of a method of printing information on the surface of a battery cell using a heat transfer machine, the method including unwinding a heat transfer film having an adhesion layer for indicating the information stacked on a release paper from a heat transfer roller, on which the heat transfer film is wound, locating the heat transfer film on one major surface of the battery cell, applying heat and pressure to the heat transfer film to attach the adhesion layer of the heat transfer film to one major surface of the battery cell, and winding the release paper of the heat transfer film on a release paper roller.

In the method of printing the surface of the battery cell according to the present invention as described above, therefore, it is possible to solve problems, such as generation of air bubbles or separation, caused during a conventional process of printing battery cell information on a battery cell using a label attachment method or a PAD printing method or problems, such as high expense necessary to acquire equipment, thereby providing an effect of printing battery cell information on the surface of the battery cell through a simplified process and with low expense.

The heat transfer machine, which prints information on the surface of the battery cell, may be configured to have a structure including the heat transfer roller, on which the heat transfer film is wound, a heat stamp for applying heat and pressure to the heat transfer film unwound from the heat transfer roller on the battery cell, the release paper roller, on which the release paper is wound after heat is transferred to the battery cell, and a battery cell feeder for feeding a plurality of battery cells such that heat is sequentially transferred to the battery cells.

The heat stamp performs heat transfer at a temperature which does not cause chemical change of the battery cell. Specifically, the heat stamp performs heat transfer at a temperature of 30 to 60 °C. In a case in which heat transfer is carried out at a temperature of less than 30 °C, a portion of the adhesion layer of the heat transfer film may not be attached to the surface of the battery cell, which is not preferable. In a case in which heat transfer is carried out at a temperature of more than 60 °C, on the other hand, the battery cell may be deteriorated with the result that reaction between electrode active materials and an electrolyte of the battery cell may be accelerated to generate gas and the battery cell may expand due to the gas generated in the battery cell, which is also not preferable.

In addition, the heat stamp applies a pressure of 0.5 to 1.5 bar to the heat transfer film and the battery cell. In a case in which the pressure is less than 0.5 bar, it may be difficult to attach the adhesion layer of the heat transfer film to the surface of the battery cell, which is not preferable. In a case in which the pressure is more than 1.5 bar, on the other hand, electrodes of the battery cell may be twisted or damaged, which is also not preferable.

Meanwhile, a concrete process of printing information on the surface of the battery cell using the heat transfer machine with the above-stated construction is as follows.

First, the heat transfer film is unwound form the heat transfer roller and then the heat transfer film is located on one major surface of the battery cell. Subsequently, the heat stamp applies heat and pressure to the heat transfer film such that the heat transfer film is attached to one major surface of the battery cell. The adhesion layer of the heat transfer film is attached to the battery cell and the release paper, from which the adhesion layer is separated, is wound on the release paper roller.

In the present invention, adhesion layers of the heat transfer film are arranged on the release paper at predetermined intervals and battery cells are fed by the battery cell feeder such that heat is sequentially transferred to the respective battery cells. Consequently, it is possible to continuously transfer heat to the surfaces of the battery cells through rotation of the heat transfer roller and the release paper roller and operation of the battery cell feeder.

The heat transfer film may be configured to have a structure in which the adhesion layer is stacked on the release paper. The adhesion layer may be configured to have a structure in which a print layer and an adhesive layer are stacked. Battery cell information may be printed on the print layer and the adhesive layer may attach the print layer to the surface of the battery cell when heat and pressure are applied to the heat transfer film.

The material for the print layer is not particularly restricted . For example, the print layer may be formed of paper, polymer resin, or metal.

In addition, the battery cell information of the print layer may include any one or a combination of two or more selected from among a manufacturing company, logo, manufacturing date, type, voltage, and capacity of the battery cell. Some or all of the battery cell information may be formed as a code that can be recognized by an additional recognition device. For example, some or all of the battery cell information may be formed as a barcode or a quick response (QR) code.

The battery cell is configured to have a structure in which an electrode assembly impregnated with an electrolyte and having a cathode, an anode, and a separator disposed between the cathode and the anode, is mounted in pouch-shaped case made of a laminate sheet.

That is, the battery cell is a pouch-shaped battery cell configured to have a structure in which an electrode assembly is received in a pouch-shaped case made of a laminate sheet.

The laminate sheet may include a resin layer exhibiting high durability, a metal blocking layer, and a resin sealant layer exhibiting a high thermal bonding property. The resin layer may be thermally bonded.

It is required for the resin layer to exhibit high resistance against external environment. That is, it is required for the resin layer to exhibit more than a predetermined tensile strength and weather resistance. For this reason, the resin layer may be made of a polymer resin, such as polyethylene terephthalate (PET) or oriented nylon film; however, the present invention is not limited thereto.

The metal blocking layer may function to prevent introduction or leakage of foreign matter, such as gas and moisture and, in addition, to enhance strength of the battery case. To this end, the metal blocking layer may be formed of aluminum.

The resin sealant layer may be made of a polyolefin-based resin which exhibits a high thermal bonding property (a high thermal adhesive property) and a low hygroscopic property, which is necessary to restrain permeation of an electrolyte, and is not expanded or is not corroded by the electrolyte. In a concrete example, the resin sealant layer may be made of a cast polypropylene (CPP) resin.

In the present invention, the battery cell may be a lithium secondary battery exhibiting high energy density and discharge voltage. Examples of the lithium secondary battery may include a lithium ion secondary battery and a lithium polymer secondary battery. In addition, the lithium secondary battery may further include a nickel metal hydride secondary battery.

In accordance with another aspect there is provided a battery cell having battery cell information printed thereon using the method of printing the surface of the battery cell as described above.

In accordance with a further aspect there is provided a device including the battery cell with the above-stated construction as a power source.

Concrete examples of the device, in which the battery cell may be used, may include, a mobile phone, a portable computer, a smart phone, a smart pad, a netbook computer, a light electronic vehicle (LEV), an electric vehicle, a hybrid electric vehicle, a plug-in hybrid electric vehicle, and a power storage device.

The structure and manufacturing method of the device are well known in the art to which the present invention pertains and, therefore, a detailed description thereof will be omitted.

### [DESCRIPTION OF DRAWINGS]

The above and other objects, features and other advantages of the present invention will be more clearly understood from the following detailed description taken in conjunction with the accompanying drawings, in which:
FIG. 1 is a typical view showing a process of printing the surface of a battery cell according to an embodiment of the present invention;
FIG. 2 is a flowchart showing a method of printing the surface of a battery cell according to an embodiment of the present invention; and
FIG. 3 is a typical view showing a prismatic battery cell having battery cell information printed thereon.

### [BEST MODE]

Now, preferred embodiments of the present invention will be described in detail with reference to the accompanying drawings. It should be noted, however, that the scope of the present invention is not limited by the illustrated embodiments.

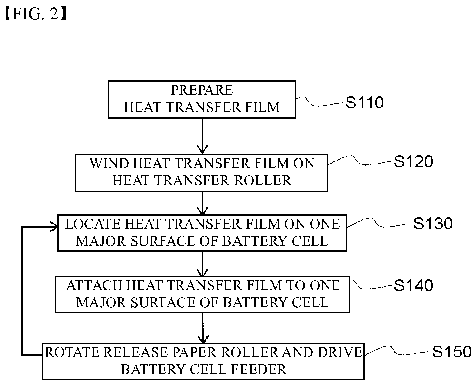

FIG. 1 is a typical view showing a process of printing the surface of a battery cell according to an embodiment of the present invention and FIG. 2 is a flowchart showing a method of printing the surface of a battery cell according to an embodiment of the present invention.

Referring to FIGS. 1 and 2, a heat transfer machine 100 is configured to have a structure including a heat transfer roller 110, on which a heat transfer film 200 is wound, a heat stamp 130 for applying heat and pressure to the heat transfer film 200 unwound from the heat transfer roller 110 on a battery cell 304, a release paper roller 120, on which a release paper 210 is wound after heat is transferred to the battery cell 304, and a battery cell feeder (not shown) for feeding a plurality of battery cells 302, 304, and 306 such that heat is sequentially transferred to the battery cells 302, 304, and 306.

A process of printing the surfaces of the battery cells 302, 304, and 306 using the heat transfer machine 100 with the above-stated construction is as follows.

First, a heat transfer film 200 having adhesion layers 220 stacked on a release paper 210 is prepared. Each of the adhesion layers 220 includes a print layer having battery cell information printed thereon and an adhesive layer configured to be attached to a battery cell during a heat transfer process. The adhesion layers 220 are arranged on the release paper 210 at predetermined intervals. In this way, the heat transfer film 200 is manufactured.

The manufactured heat transfer film 200 is wound on the heat transfer roller 110 of the heat transfer machine 100. Subsequently, the manufactured heat transfer film 200 wound on the heat transfer roller 110 is unwound such that one of the adhesion layers 220 of the heat transfer film 200 is located on one major surface of the battery cell 304. Subsequently, the heat stamp 130 applies heat having a temperature of 40 to 50 °C and a pressure of 1 bar to the heat transfer film 200 such that one of the adhesion layers 220 of the heat transfer film 200 is attached to one major surface of the battery cell 304. The release paper 210, from which one of the adhesion layers 220 is separated, is wound on the release paper roller 120.

The battery cell feeder sequentially feeds the battery cells 302, 304, and 306 such that the surfaces of the battery cells 302, 304, and 306 are printed through the heat transfer process. Consequently, it is possible to continuously transfer heat to the surfaces of the battery cells 302, 304, and 306 through rotation of the heat transfer roller 110 and the release paper roller 120 and operation of the battery cell feeder.

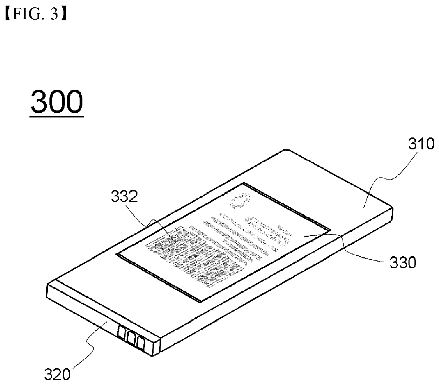

FIG. 3 is a typical view showing a battery cell having battery cell information printed thereon using a process of printing the surface of a battery cell.

Referring to FIG. 3, a battery cell 300 is configured to have a structure in which an electrode assembly is mounted in a prismatic battery cell case 310 configured to have a rectangular parallelepiped structure open at one side thereof and a cap plate 320 is coupled to the open side of the battery cell case 310. Battery cell information 330 is printed on one major surface of the battery cell case 310. The battery cell information 330 is printed on the surface of the battery cell case 310 through the process described with reference to FIGS. 1 and 2.

The battery cell information 330 includes a manufacturing company, logo, manufacturing date, type, voltage, and capacity of a battery cell or caution during use of the battery cell. Some of the battery cell information is indicated as a barcode 332.

### [INDUSTRIAL APPLICABILITY]

As is apparent from the above description, in the method of printing the surface of the battery cell according to the present invention, it is possible to solve problems, such as generation of air bubbles or separation, caused during a conventional process of printing battery cell information on a battery cell using a label attachment method or a PAD printing method or problems, such as high expense necessary to acquire equipment, thereby providing an effect of printing battery cell information on the surface of the battery cell through a simplified process and with low expense.

## Claims

1. A method of printing information on a surface of a battery cell using a heat transfer machine, the method comprising:
unwinding a heat transfer film having an adhesion layer for indicating the information stacked on a release paper from a heat transfer roller, on which the heat transfer film is wound;
locating the heat transfer film on one major surface of the battery cell; the battery cell being configured to have a structure in which an electrode assembly impregnated with an electrolyte and having a cathode, an anode, and a separator disposed between the cathode and the anode is mounted in a pouch-shaped case made of a laminate sheet;
applying heat and pressure to the heat transfer film to attach the adhesion layer of the heat transfer film to one major surface of the battery cell; and
winding the release paper of the heat transfer film on a release paper roller, and
wherein the heat transfer machine is configured to have a structure comprising:
the heat transfer roller, on which the heat transfer film is wound;
a heat stamp for applying heat and pressure to the heat transfer film unwound from the heat transfer roller on the battery cell;
the release paper roller, on which the release paper is wound after heat is transferred to the battery cell; and
a battery cell feeder for feeding a plurality of battery cells such that heat is
sequentially transferred to the battery cells,
wherein the heat stamp performs heat transfer at a temperature of 30 to 60 °C,
wherein the heat stamp applies a pressure of 0.5 to 1.5 bar to the heat transfer film and the battery cell.

2. The method according to claim 1, wherein the adhesion layer comprises a print layer having battery cell information indicated thereon and an adhesive layer for attaching the print layer to the battery cell.

3. The method according to claim 2, wherein the print layer is formed of paper, polymer resin, or metal.

4. The method according to claim 2, wherein the battery cell information of the print layer comprises any one or a combination of two or more selected from among a manufacturing company, logo, manufacturing date, and type of the battery cell.

5. The method according to claim 2, wherein the battery cell information of the print layer comprises a barcode, in which at least one selected from among a manufacturing company, manufacturing date, and type of the battery cell is input.

6. The method according to claim 1, wherein the laminate sheet comprises a resin layer and a metal layer.

7. The method according to claim 1, wherein the battery cell is a lithium secondary battery.

## Patentansprüche

1. Verfahren zum Drucken von Information auf eine Oberfläche einer Batteriezelle unter Verwendung einer Wärmeübertragungsmaschine, wobei das Verfahren umfasst:
Abwickeln eines Wärmeübertragungsfilms mit einer Haftschicht zum Anzeigen der Information, die auf einem Trägerpapier von einer Wärmeübertragungswalze, auf der der Wärmeübertragungsfilm gewickelt ist, gestapelt ist;
Platzieren des Wärmeübertragungsfilms auf einer Hauptoberfläche der Batteriezelle; wobei die Batteriezelle dazu eingerichtet ist eine Struktur aufzuweisen, in der eine Elektrodenanordnung, die mit einem Elektrolyten imprägnierte ist und eine Kathode, eine Anode und einen zwischen der Kathode und der Anode angeordneten Separator aufweist, in einem beutelförmigen Gehäuse aus einer Laminatplatte montiert ist;
Aufbringen von Wärme und Druck auf den Wärmeübertragungsfilm, um die Haftschicht des Wärmeübertragungsfilms an einer Hauptoberfläche der Batteriezelle anzubringen; und
Aufwickeln des Trägerpapiers des Wärmeübertragungsfilms auf eine Trägerpapierwalze und
wobei die Wärmeübertragungsmaschine dazu eingerichtet ist eine Struktur aufzuweisen, umfassend:
die Wärmeübertragungswalze, auf die der Wärmeübertragungsfilm gewickelt ist;
einen Wärmestempel zum Aufbringen von Wärme und Druck auf den Wärmeübertragungsfilm, der von der Wärmeübertragungswalze auf die Batteriezelle abgewickelt ist;
die Trägerpapierwalze, auf die das Trägerpapier gewickelt wird, nachdem Wärme auf die Batteriezelle übertragen ist; und
eine Batteriezellenzuführung zum Zuführen einer Vielzahl von Batteriezellen, so dass Wärme nacheinander auf die Batteriezellen übertragen wird,
wobei der Wärmestempel eine Wärmeübertragung bei einer Temperatur von 30 bis 60 °C durchführt,
wobei der Wärmestempel einen Druck von 0,5 bis 1,5 bar auf den Wärmeübertragungsfilm und die Batteriezelle aufbringt.

2. Verfahren nach Anspruch 1, wobei die Haftschicht eine Druckschicht mit darauf angezeigter Batteriezelleninformation und eine Haftschicht zum Anbringen der Druckschicht an die Batteriezelle umfasst.

3. Verfahren nach Anspruch 2, wobei die Druckschicht aus Papier, Polymerharz oder Metall gebildet ist.

4. Verfahren nach Anspruch 2, wobei die Batteriezelleninformation der Druckschicht ein beliebiges oder eine Kombination von zwei oder mehr umfasst, ausgewählt aus einem Herstellungsunternehmen, einem Logo, einem Herstellungsdatum und einem Typ der Batteriezelle.

5. Verfahren nach Anspruch 2, wobei die Batteriezelleninformation der Druckschicht einen Barcode umfasst, in den mindestens eines eingegeben ist, ausgewählt aus einem Herstellungsunternehmen, einem Herstellungsdatum und einem Typ der Batteriezelle.

6. Verfahren nach Anspruch 1, wobei die Laminatplatte eine Harzschicht und eine Metallschicht umfasst.

7. Verfahren nach Anspruch 1, wobei die Batteriezelle eine Lithium-Sekundärbatterie ist.

## Revendications

1. Procédé d'impression d'informations sur une surface d'un élément de batterie à l'aide d'une machine de transfert de chaleur, le procédé comprenant :
le déroulement d'un film de transfert de chaleur ayant une couche d'adhérence pour indiquer les informations empilées sur un papier anti-adhésif à partir d'un rouleau de transfert de chaleur, sur lequel est enroulé le film de transfert de chaleur ;
le positionnement du film de transfert de chaleur sur une surface principale de l'élément de batterie ; l'élément de batterie étant configuré pour avoir une structure dans laquelle un ensemble d'électrodes imprégné d'un électrolyte et ayant une cathode, une anode et un séparateur disposé entre la cathode et l'anode est monté dans un étui en forme de sac en feuille stratifiée ;
l'application de chaleur et de pression au film de transfert de chaleur pour fixer la couche d'adhérence du film de transfert de chaleur à une surface principale de l'élément de batterie ; et
l'enroulement du papier anti-adhésif du film de transfert de chaleur sur un rouleau de papier anti-adhésif, et
dans lequel la machine de transfert de chaleur est configurée pour avoir une structure comprenant :
le rouleau de transfert de chaleur, sur lequel le film de transfert de chaleur est enroulé ;
une estampille à chaud pour appliquer de la chaleur et une pression au film de transfert de chaleur déroulé du rouleau de transfert de chaleur sur l'élément de batterie ;
le rouleau de papier anti-adhésif, sur lequel le papier anti-adhésif est enroulé après transfert de chaleur à l'élément de batterie ; et
un dispositif d'alimentation de l'élément de batterie pour alimenter une pluralité d'éléments de batterie de sorte que de la chaleur soit transférée séquentiellement aux éléments de batterie,
dans lequel l'estampille à chaud réalise un transfert de chaleur à une température de 30 à 60 °C,
dans lequel l'estampille à chaud applique une pression de 0,5 à 1,5 bar au film de transfert de chaleur et à l'élément de batterie.

2. Procédé selon la revendication 1, dans lequel la couche d'adhérence comprend une couche d'impression sur laquelle sont indiquées des informations d'élément de batterie et une couche adhésive pour fixer la couche d'impression à l'élément de batterie.

3. Procédé selon la revendication 2, dans lequel la couche d'impression est formée de papier, de résine polymère ou de métal.

4. Procédé selon la revendication 2, dans lequel les informations d'élément de batterie de la couche d'impression comprennent l'un quelconque ou une combinaison de deux éléments ou plus choisis parmi une société de fabrication, un logo, une date de fabrication et un type de l'élément de batterie.

5. Procédé selon la revendication 2, dans lequel les informations d'élément de batterie de la couche d'impression comprennent un code à barres, dans lequel au moins un élément choisi parmi une société de fabrication, une date de fabrication et un type de l'élément de batterie est fourni en entrée.

6. Procédé selon la revendication 1, dans lequel la feuille stratifiée comprend une couche de résine et une couche de métal.

7. Procédé selon la revendication 1, dans lequel l'élément de batterie est une batterie secondaire au lithium.
